# EUROPEAN PATENT APPLICATION

(11) **EP 3 648 035 A1**
(43) Date of publication of application: **06.05.2020**
(21) Application number: 18204314.1
(22) Date of filing: 05.11.2018
(51) Int. Cl.: G06Q 20/32

(54) **SYSTEM AND METHOD FOR MANAGING THE TRANSACTION OF PAYMENTS AND OTHER FINANCIAL ACTIONS, DATABASES INTEGRATION, AUTHENTICATION / DIGITAL IDENTITY**

(71) Applicant: Sforza, Maurizio, 00137 Roma (IT)
(72) Inventor: Sforza, Maurizio, 00137 Roma (IT)
(74) Representative: De Tullio, Michele Elio

(57) **Abstract**

The present invention refers to a system and to a method that uses the system to manage the authentication, the informative transaction for the purpose of integrating multiple databases, in particular the economic transaction in the form of various financial and banking operations, in particular to issue payments, or to transfer funds, money, stocks between two or more accounts or other similar instruments intended for the exchange of data or to receive or issue money.

The system of the present invention makes it possible to reduce the time necessary to make transactions on databases, also financial ones, using a pocket-sized device (SF) that is easy to use. Moreover, every transaction is managed in total security thanks to the mobile device (TK) that can be connected to the portable digital device (SF) that identifies the access keys entered by the user before authorising access to the same portable digital device (SF) by the user.

Moreover, thanks to the data updating device (AG), it is always possible to have the data of interest updated, especially those concerning exchange rates, quotations of cryptocurrencies and other parameters subject to continuous variations.

Finally, thanks to the cooperation between the first (C1) and the second (C2) components, it is possible to analyse and process the information provided by the user interface (UI) and/or acquire further information for the development of the transaction requested.

## Description

### Field of the invention

This invention refers to a system and to a method that uses this system to manage various financial and banking operations relative to authentication/digital identity and the integration of databases, in particular for issuing payments, or transferring funds, money, stocks between two or more accounts or other similar instruments for receiving or issuing money.

### State of the art.

As of today, transactions, also for finance, have always been developed for the transfer of information or money from one method of exchange to another, for example between databases, current accounts, credit or debit cards, stocks or bonds, as well as the steadily increasing use of cryptocurrencies.

Such operations require multiple operations among databases, stock exchanges, and various credit institutes, with the inevitable consequence of prolonging times for the completion of the transaction. Moreover, such transactions are quite complex, require specific know-how to be able to use them and are therefore not suitable of all users who are then obliged to consult an expert in the sector.

Therefore, the Applicant for this patent has found the need to create a system capable of carrying out transactions, payments, and transfers of money securely, using an interface that is readily available, reliable, and easily manageable directly by the user with simple operations.

### Summary of the invention

According to a first aspect, the present invention refers to a system for managing the authentication, information transaction for the purpose of integrating different databases, in particular the economic transaction used in payments and other financial actions as indicated in claim 1.

The Applicant for this patent was indeed surprised to find that the technical problem found as described above can be resolved effectively and reliably by means of a system for managing the authentication, the information transaction for the purpose of integrating different databases, in particular the economic transaction used in payments and other financial actions, which include:
- a portable digital device (SF), which can be accessed by the user through an initial form of authentication based on personal and biometric data;
- at least one mobile device (TK) designed to be connected to said portable device (SF) containing a method suitable for reinforcing said initial form of identification provided by the user at the time he/she makes a request to use the portable device (SF);
- at least one database (DB) that can be consulted by the system, containing the user's personal data, various other information about the user, in particular the user's assets and information linked to the means and platforms of exchange used by the user;
- at least one data updating device (AG) that maintains the data contained in said database (DB) updated;
- at least one user interface (UI) that collects the information provided by the user concerning the type of transaction requested, for example the database selected, the type of transaction and, if the transaction is economic, the chosen method of exchange, the quantity of currency to transfer, the beneficiary of the transaction;
- at least one first component (C1) capable of analysing and processing the information provided by said user interface (UI) and/or to acquire further information for the development of said transaction request;
- at least one second component (C2) capable of managing, processing, and developing the information provided by said first component (C1) within the exchange platform, in order to create and complete said transaction.

The term "method of exchange" used in this description and in the claims attached refer to the subset of the economic transactions, in particular to any financial note or quoted bonds, subject to trade on the market through a financial protocol like legal currency, virtual currency (cryptocurrencies), stocks, bonds, futures, gold, raw materials, etc., in general any resource that may have a quantifiable and recognised value.

The term "exchange platform" refers to the set of economic and non-economic transactions; in particular it is also used in this description and in the claims attached to refer to any institute that, by means of a financial protocol, makes it possible to trade between different methods of exchange, for example exchanges of virtual currencies.

The system of the present invention makes it possible to reduce the times for carrying out even financial transactions, using portable digital device (SF), which is easy to use, that can substitute current portfolios. Indeed, by simply setting the values on the screen of this device, and having available the various components of the system contained in the device or connected to it, it is possible to easily and intuitively exchange information, issue payments, transfer funds, money, stocks, etc.

Moreover, every transaction is managed in total security, thanks to the mobile device (TK), which can be connected to the portable digital device (SF) that identifies and validates the access keys inserted by the user prior to authorising access to the portable digital device (SF) by the user.

Additionally, thanks to the data updating device (AG), it is always possible to have the databases connected updated on the parameters of interest, for example exchanges, quotations of the cryptocurrencies, and other payments subjects to continual variations.

Finally, thanks to the cooperation between the first (C1) and the second (C2) components, it is possible to analyse and process the information provided by the user interface (UI) and/or acquire further information for the development of the transaction requested.

According to a preferred embodiment of this invention, said portable device (SF) essentially comprises:
- a chip reader, magnetic stripe, NFC/RFID transceivers for insertion and portability of personal or financial cards;
- at least one connector, for insertion and portability of small storage devices equipped with connectors, magnetic stripe readers, chip readers, USB devices, and for the reading of the data contained in them;
- at least one microcontroller, and any potential extension or additional module, for the processing of the data contained in said devices with chips or magnetic stripes;
- at least one display for the visualization and interactivity of the data contained in said devices with chip or magnetic stripe and for the implementation of the relative programmes, also with the function of video keypad, equipped with a photo/video camera that also works as a scanner, speaker and audio system;
- a cabled system for connection to other hardware;
- a rechargeable power supply system 8 and at least one switch with the possibility of housing on one free side or on a portion of the same a solar cell power system to increase the duration and performance;
- at least one wireless access for the connection with a manager for the development of specific programmes.

According to a preferred embodiment of the present invention, said at least one mobile device (TK) is a bracelet, pendant, ring, or another fashion accessory and also not wearable by the user that can contain a uniquely encrypted pen drive that associates the mobile device (SF) to the owner. Said mobile device (TK) can be accessed within a certain maximum distance from the mobile device (SF).

In this way, both the portable (SF) and mobile (TK) devices can be connected so that they can communicate with each other to enable the operations requested by the user.

According to a preferred embodiment of the present invention, said at least one mobile device (TK) is an RFID-type label ("Radio Frequency IDentification"), or a device capable of reading and transmitting information and data quickly, for example, in a fraction of a second. Preferably, said mobile device is an NFC-type ("Near Field Communication") high-frequency integrated circuit, a technological evolution similar to the RFID mentioned above, which makes it possible to exchange data between two devices under more secure conditions.

In this way, once the mobile device (TK) is positioned near the portable device (SF), it verifies the credentials entered by the user before allowing him/her access to the data stored in the portable device (SF) itself, for example the user's general information, the user's identification document, data relative to the credit card or current account, and other confidential and biometric data.

According to a preferred embodiment of the present invention, said at least one data updating device (AG) can be started up at regular intervals and connected to one or more central servers that contain the updated information concerning the values of specified interest, in particular of the various cryptocurrencies, stocks, quotations of various markets, and other financial data that is being updated continually.

In this way, said data updating device (AG) maintains the data contained in each of the user's databases updated, making it possible to access a continually updated overall panoramic view of the databases of interest, in particular those linked to finance, the stock exchange, and so on, before the user undertakes any transaction from his portable device.

According to a preferred embodiment of the present invention, said at least one first component (C1) is able to acquire information provided by said identifying user interface (UI) of the sender and the beneficiary or receiver of the transaction and, if the transaction is financial, of the data concerning the methods used for the exchange, whether it be monetary, stock holdings, bonds, and so on.

According to a preferred embodiment of the present invention, said at least one first component (C1) can authenticate, if necessary, the subject who requests the transaction and/or the subject who receives it.

According to a preferred embodiment of the present invention, said system also comprises a third component (C3) that, based on the indications that the user provides to the user interface (UI) concerning the different methods of exchange to be used, can select, from the portion of the database (DB) that contains the data relative to the user's assets, the right quantities of currency to be transferred.

According to a preferred embodiment of the present invention, said system also comprises a fourth component (C4) that is able to convert the methods of exchange made available by said third component (C3) in the method of exchange specified by the user in the user interface, for example when the user wants to make a transaction for payment in British pounds, but possesses only Euros.

According to a preferred embodiment of the present invention, said fourth component (C4) can transmit to said second component (C2) the information relative to the method of exchange necessary for the transaction.

According to a preferred embodiment of the present invention, said system also comprises a fifth component (C5) that, if there should be no indications by the user on which method of exchange to use, can automatically manage the assets and select the most convenient conversion in terms of costs.

In a second aspect, the present invention refers to a method for managing the authentication, the informative transaction for the purpose of integrating multiple databases, in particular the economic transaction in the form of payments and other financial actions like those indicated in claim 6.

The Applicant for this patent was indeed surprised to find that the technical problem described above can be resolved efficiently and reliably by means of a system for managing the authentication, the informative transaction for the purpose of integrating multiple databases, in particular the economic transaction in the form of payments and other financial actions like those comprising the following phases:
a) enabling the user to access the information available by means of a portable digital device (SF) through a first form of authentication;
b) connecting said portable device (SF) to a mobile device (TK) that contains an element capable of reinforcing said first form of authentication provided by the user at the time he/she makes a request to use the portable device (SF);
c) consulting a database (DB) that contains the user's personal data, the information on the databases of interest, in particular on the user's assets and the information linked to the methods and platforms of exchange used by the user;
d) enabling a data updating device (AG) to maintain the data contained in said database (DB) updated;
e) collecting in a user interface (UI) the information provided by the user on the type of transaction requested and, if the transaction is economic or financial, for example the method of exchange selected, the quantity of currency to be transferred, the beneficiary of the transaction;
f) analysing and processing by means of a first component (C1) the information provided by said user interface (UI) and/or acquiring further information for the development of said transaction requested;
g) managing, processing, and developing information provided by said first component (C1) by means of a second component (C2) within the exchange platform for the purpose of creating and completing said transaction.

According to a preferred embodiment of the present invention, said method also comprises by means of a third component (C3) the phase of selecting, from the portion of the database (DB) that contains the data relative to the database of interest, in particular those relative to the user's assets, the correct quantities of currency to be transferred, based on the indications provided by the user to the user interface (UI) relative to the multiple methods of exchange used.

According to a preferred embodiment of the present invention, said method also comprises by means of a fourth component (C4) the phase of converting methods of exchange made available by said third component (C3) in the method of exchange specified by the user in the user interface (UI), and of transmitting the information relative to the method of exchange necessary for the transaction to the second component (C2).

According to a preferred embodiment of the present invention, said method also comprises by means of a fifth component (C5) the phase of automatically managing assets and selecting the most convenient conversion in terms of costs, if there should not be indications by the user on which method of exchange to use.

Further characteristics and advantages of the present found will be better highlighted by the examination of the following detailed descriptions of the preferred embodiments, but not exclusive, illustrated by way of example and in no way exhaustive, with the support of the drawings attached, in which:
- Figure 1 is a view of an embodiment of a portable digital device (SF) used in the present invention;
- Figure 2 represents a drawing depicting the various elements that make up the system and method of this present invention.

### DETAILED DESCRIPTION.

The detailed description that follows refers to particular embodiments of the system and method of the present invention without limiting its contents.

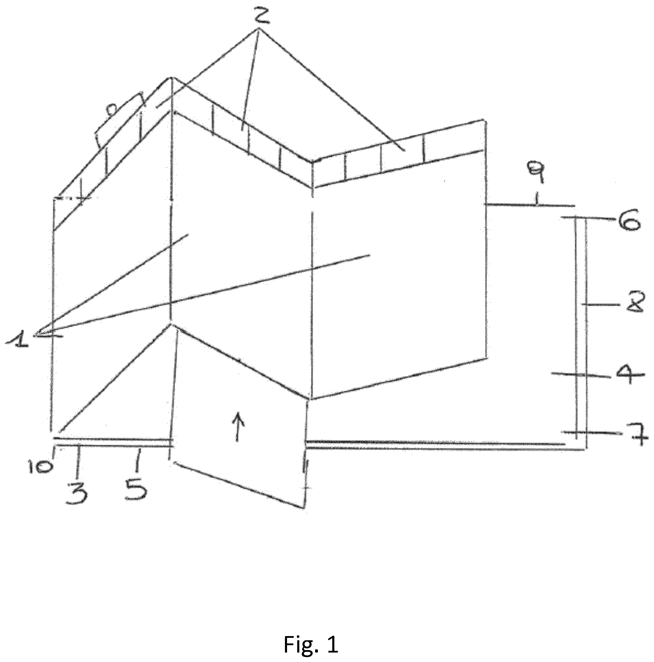

With particular reference to Figure 1 a system 1 is described, made up of a portable digital device (SF) that essentially comprises:
- a chip reader 1, magnetic stripe, NFC/RFID transceivers for the insertion and portability of personal or financial cards;
- at least one connector 2 for the insertion and portability of a small database with connectors, magnetic stripe readers, chip readers, USB devices and for the reading of the data contained inside it;
- at least one microcontroller 3 and any potential extension or additional module for the processing of the data contained in said devices equipped with chips or magnetic stripe;
- at least one display 4 for the visualisation as well as the interactivity of the data contained in said devices equipped with chip or magnetic stripe and for the implementation of the relative programmes, also with the function of video keypad, equipped with a photo/video camera 7, also with a scanner function, speaker and audio system 6;
- a cabled system 10 for connection to other hardware;
- a rechargeable power supply system 8 and at least one switch 9 with the possibility of housing on a free part or on a portion of the same a solar cell power system to increase duration and performance;
- at least one wireless access 5 for connection to a manager for the development of specific programmes.

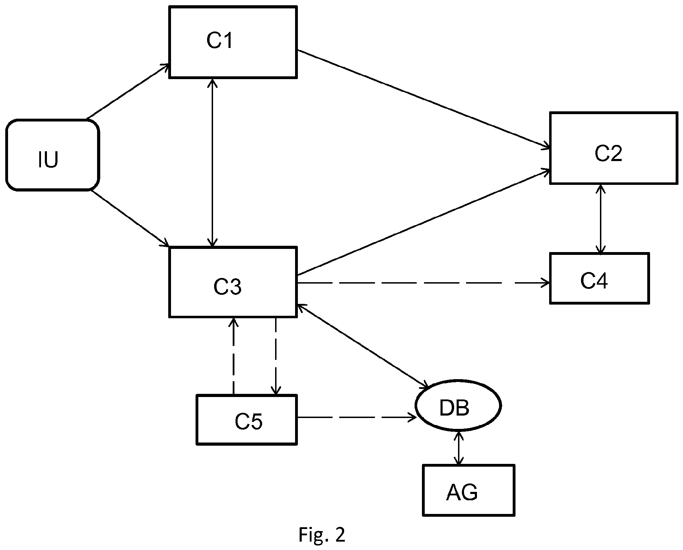

With specific reference to Figure 2, system and method of the present invention are described.

Here below is a description of the phases necessary before being able to carry out a transaction.

The first time the portable device (SF) is turned on, the presence of the programming mobile device (TK) in the vicinity will be requested and the user configuration procedure will be started up.

Depending on the data to be entered, the procedure will request the reading of the cards that attest to the user's identity (electronic identity cards, public health care cards, passports, etc., and, if necessary, the possibility to scan important documents or biometric data); the reading of the financial information from credit/debit cards and the entering of data representing current accounts or others; the entering of payment addresses or private keys for virtual currency payments or other types of information.

The mobile device (TK) therefore provides a first form of authentication and authorisation of the user. Later the user will be able to request other types of authentication and authorisation.

If the user wishes to modify the configuration of the portable digital device (SF), it will be sufficient to move the same (SF) nearer to the mobile device (TK) to show and be able to edit the basic information.

Once the user has been authorised by the mobile device (TK) to use the portable device (SF), it is possible to start the procedure for the execution of a transaction of data, money, securities, shares, and so on, where the user will be able to enter all the information he/she deems useful for the purpose of the transaction to be carried out in the user interface (UI).

The database (DB) contains all the information linked to the databases of interest, as well as information linked to the methods and platforms of exchange, how the user's assets are made up, and also contains the personal data of the same. This database (DB) is interrogated for the management of the transaction; consequently, it is continually updated by means of the updating device (AG). One of the main functions of the AG device is indeed to keep the quotations of the various currencies updated in the database (DB), especially those of the cryptocurrencies, which typically tend to vary very quickly to be able to manage the transaction as efficiently as possible for the user. The updating device (AG) is therefore activated at regular intervals and every time an application with the function of interacting with the database (DB) is started up and connected to the central server where the values of such currencies and cryptocurrencies are available.

At this point it is possible to activate the transaction requested by the user.

Here below are some examples of the subset of financial transactions carried out using the system of the present invention.

### Example 1.

A single method of exchange, from current account to current account, without physical methods of payment.

The user uses the portable device (SF) like a normal personal computer or smartphone, relying on the applications and services developed by the banks and by the Exchanges.

### Example 2.

A single method of exchange with physical payment methods, for example sender's data stored in the portable device (SF) and beneficiary's data to be acquired by means of credit card or another device with a chip.

The user starts the application dedicated to this operation on the portable device (SF) and enters the data relative to the transaction in the graphic interface.

Once the operation has been confirmed the application will recall the first component (C1) that will carry out the reading and verification of the data stored in the memory of the portable device (SF).

The application will then request the beneficiary's data and start up the first component (C1).

The user will use the NFC reader to acquire the credit card data.

The first component (C1) will read the basic information of the receiver of the credit card, establish the connection via internet to the banking services for sending and the authentication of the data, receive the beneficiary's current account data and activate the second component (C2). The latter (C2) will transfer the currency and show the user the final status of the transaction via the user interface (UI).

### Example 3.

Sender and beneficiary of the transaction issue the data of the transaction through the use of physical instruments. The former through smartphone or another portable device (SF) and the latter through the credit card.

The user starts the application dedicated to this operation on the portable device (SF) and enters the data relative to the transaction in the user interface (UI).

The application will then request the sender's data and start up the first component (C1).

The user will use the NFC reader to acquire the smartphone data.

The first component (C1) will carry out the reading of the basic information of the receiver of the smartphone, establish the connection via internet to the banking services for sending and the authentication of the data and receive the beneficiary's current account data.

The application will then request the beneficiary's data and start up the first component (C1).

The user will use the NFC reader to acquire the debit card data.

The first component (C1) will read the basic information of the receiver of the card, establish the connection via internet to the banking services for sending and the authentication of the data, receive the beneficiary's current account data and activate the second component (C2). The latter (C2) will transfer the currency and show the user the final status of the transaction via the user interface (UI).

### Example 4.

Transaction of different cryptocurrencies: from currency 1 to currency 2.

In this case the sender's data are stored in the portable device (SF), the beneficiary's data are to be acquired, for example by reading a QR code; the currency 1 is selected by the user.

These operations are similar to those of the transactions in which the method of exchange input is different from the method of exchange output; the transactions that see the values quoted as input and the legal currency as output.

The user starts up the dedicated application of the portable device (SF) and selects the item for this operation in the user interface (UI), enters the basic data of the transaction, selects the currency 1 and frames the QR code.

The application recalls the first component (C1) and the third component (C3).

The first component (C1) reads the payment address from the QR code and waits to be able to communicate it to the second component (C2).

The third component (C3) interrogates the database (DB) to search currency 1, determines the quantity of currency 1 to be sent to the fourth component (C4) and starts up the fourth component (C4).

The fourth component (C4) converts the currency 1 into currency 2 and starts up the second component (C2) which, in turn, receives the currency 2 to be used for the transaction and recalls the first component (C1) and acquires the payment address, fills in the form and carries out the transaction, showing the user the final status of the transaction via the user interface (UI).

### Example 5.

Combination of methods of exchange: from currency 1 to currency 2 to currency X. In this case the data of the sender are stored in the portable device (SF), the data of the beneficiary are stored in the list of beneficiaries and an automatic selection of the input money is made.

The user starts up the dedicated application of the portable device (SF) and selects the item for this operation in the user interface (UI), enters the basic data of the transaction, selects the beneficiary from the list and leaves the application to select the input currency to be used.

The application recalls the first component (C1), the fifth component (C5), and the third component (C3).

The first component (C1) reads the payment address from the list of beneficiaries and waits to be able to communicate it to the second component (C2).

The fifth component (C5), in compliance with the criteria set by the user, interrogates the database (DB) to search for currency 1 and currency 2 and begins to select the third component (C3).

The third component (C3) determines the quantity of currency 1 and currency 2 to send to the fourth component (C4) and starts it up.

The fourth component (C4) converts the currency 1 into currency X and converts currency 2 into currency X, then starts up the second component (C2) which, in turn, receives the currency 2 to be used for the transaction and recalls the first component (C1) and acquires the payment address, fills in the form and carries out the transaction, showing the user the final status of the transaction via the user interface (UI).

Naturally, experts in this branch will find many evident modifications and variants in the preferred embodiments described above, while remaining within the scope of the invention.

Therefore the present invention is not limited to the preferred embodiments described, illustrated only by way of example and not of limitation, but is defined by the claims that follow.

## Claims

1. System to manage the authentication, the informative transaction for the purpose of integrating multiple databases, in particular the economic transaction in the form of payments and/or other financial actions that include:
- a portable digital device (SF), which can be accessed by the user through an initial form of authentication based on personal and biometric data;
- a mobile device (TK) designed to be connected to a portable device (SF) that contains a method intended to reinforce said first form of identification provided by the user at the time he/she makes a request to use the portable device (SF);
- at least one database (DB) that can be consulted and contains the user's personal data, the information on the databases of interest, in particular on the user's assets and the information linked to the methods and platforms of exchange used by the user;
- at least one data updating device (AG) that maintains the data contained in said database (DB) updated;
- at least one user interface (UI) that collects the information provided by the user on the type of transaction requested, for example the database selected, the type of transaction and, if the transaction is economic or financial, the method of exchange selected, the quantity of currency to be transferred, the beneficiary of the transaction;
- at least one first component (C1) capable of analysing and processing the information provided by said user interface (UI) and/or to acquire further information for the development of said transaction request;
- at least one second component (C2) capable of managing, processing, and developing the information provided by said first component (C1) within the exchange platform, in order to create and complete said transaction.

2. A system according to claim 1 which also comprises a third component (C3) that, based on the indications that the user provides to the user interface concerning the different methods of exchange to be used, is capable of selecting, from the portion of the database that contains the data relative to the user's assets, the right quantities of currency to be transferred.

3. A system according to claim 2 that also comprises a fourth component (C4) that is capable of converting the methods of exchange made available by said third component (C3) in the method of exchange specified by the user in the user interface, and to transmit the information relative to the method of exchange necessary for the transaction to the second component (C2).

4. A system according to any one of the previous claims that also comprises a fifth component (C5) that, if there should be no indications by the user on which method of exchange to use, is capable of automatically managing the assets and selecting the most convenient conversion in terms of costs.

5. System according to any of the previous claims in which said portable digital device (SF) essentially comprises:
- a chip reader 1, magnetic stripe, NFC/RFID transceivers for the insertion and portability of personal or financial cards;
- at least one connector 2 for the insertion and portability of a small database with connectors, magnetic stripe readers, chip readers, USB devices and for the reading of the data contained inside it;
- at least one microcontroller 3 and any potential extension or additional module for the processing of the data contained in said devices equipped with chips or magnetic stripe;
- at least one display 4 for the visualisation as well as the interactivity of the data contained in said devices equipped with chip or magnetic stripe and for the implementation of the relative programmes, also with the function of video keypad, equipped with a photo/video camera 7, also with a scanner function, speaker and audio system 6;
- a cabled system 10 for connection to other hardware;
- a rechargeable power supply system 8 and at least one switch 9 with the possibility of housing on a free part or on a portion of the same a solar cell power system to increase duration and performance;
- at least one wireless access 5 for connection to a manager for the development of specific programmes.

6. Method to manage the authentication, the informative transaction for the purpose of integrating multiple databases, in particular the economic transaction in the form of payments and/or other financial actions that comprise the following phases:
a) enabling the user to access the information available by means of a digital portable digital device (SF) through a first form of authentication;
b) connecting said portable device (SF) to a mobile device (TK) that contains an element capable of reinforcing said first form of authentication provided by the user at the time he/she makes a request to use the portable device (SF);
c) consulting a database (DB) that contains the user's personal data, the information on the databases of interest, in particular on the user's assets and the information linked to the methods and platforms of exchange used by the user;
d) enabling a data updating device (AG) to maintain the data contained in said database (DB) updated;
e) collecting in a user interface (UI) the information provided by the user on the type of transaction requested and, if the transaction is economic or financial, for example the type of method of exchange selected, the quantity of currency to be transferred, the beneficiary of the transaction;
f) analysing and processing by means of a first component (C1) the information provided by said user interface (UI) and/or acquiring further information for the development of said transaction requested;
g) managing, processing, and developing information provided by said first component (C1) by means of a second component (C2) within the exchange platform for the purpose of creating and completing said transaction.

7. Method according to claim 6 which also comprises the phase of selecting, by means of a third component (C3), from the portion of the database (DB) that contains the data relative to the user's assets, the correct quantities of currency to be transferred, based on the indications provided by the user to the user interface (UI) relative to the multiple methods of exchange used.

8. Methods according to claim 7 that also comprises a fourth component (C4) that is capable of converting the methods of exchange made available by said third component (C3) in the method of exchange specified by the user in the user interface (UI), and to transmit the information relative to the method of exchange necessary for the transaction to the second component (C2).

9. Method according to any of the claims 6-8 that also comprises, thanks to a fifth component (C5), the phase of automatically managing assets and selecting the most convenient conversion in terms of costs, if there should not be indications by the user on which method of exchange to use.
